# EUROPEAN PATENT APPLICATION

(11) **EP 1 156 435 A2**
(43) Date of publication of application: **21.11.2001**
(21) Application number: 01107805.2
(22) Date of filing: 05.04.2001
(51) Int. Cl.: G06F 17/60

(54) **E-Commerce payment system**

(30) Priority: 17.04.2000 GB 0947800
(71) Applicant: Aspect Internet Holding Limited, London EC1N 8TE (GB)
(72) Inventor: Russel, Jon, London EC1N 8TE (GB); Beitner, Nick, London EC1N 8TE (GB); Underwood, Richard, London EC1N 8TE (GB); Durdrey, Oliver, London EC1N 8TE (GB); Jordan, Will, London EC1N 8TE (GB)
(74) Representative: Leeming, John Gerard

(57) **Abstract**

Cards confirming to credit card standards and having numbers forming part of a credit card clearing system are sold for predetermined amounts. This amount constitutes an initial balance for the card. The card is used in the normal manner, with all transactions being authorised and deducted from the initial balance. When the balance to the card is exhausted the card is discarded or may be replenished.

## Description

The present invention relates to payment systems principally but not exclusively for use in e-commerce.

A fundamental requirement of any form of commerce is the ability to transfer payment securely from the buyer of goods or services to the seller. In face-to-face transactions in the real world, such methods as cash, cheques, credit cards (including various forms of debit and charge cards) and vouchers of various forms are well known and have various advantages and disadvantages for different situations and users. Credit cards are also widely used over the telephone in so-called "Cardholder Not Present" transactions, in which the cardholder reads out the card number and other details to an operator or merchant or enters them via the telephone keypad.

Security in credit card transactions is provided by the signature on the reverse of the card, by using a Personal Identification Number (PIN), especially for cash withdrawals from Automated Teller Machines (ATMs), and by electronic on-line authorization of transactions. In telephone transactions a signature cannot be asked for or verified whilst giving over a PIN to an operator or merchant would breach that security. For telephone transactions, security can sometimes be provided by allowing only deliveries to the registered address of the cardholder or by requiring the cardholder to collect the goods in person and produce the card whereupon a signature can be verified. Nevertheless security concerns remain and a criminal can often cause significant loss over an indeterminate period to the cardholder and/or issuer with misappropriated cards or card details.

E-commerce over the Internet presents additional security concerns; it is difficult for a user to verify the bona fides of the operator of the website from which a purchase is contemplated and, in spite of the widespread use of effective encryption protocols, many users remain concerned that personal information, including credit card details, sent over the Internet may be intercepted and misused. A variety of systems, often involving so-called "trusted third parties" have been proposed to get around these and other concerns and to enable so-called "micro-payments" which are too small for credit card payment to be cost-effective. None of the presently proposed systems has obtained sufficiently large scale acceptance to be effective.

Various pre-payment systems, such as telephone cards and meter keys, by which metered utilities can purchased are known. However, these pre-payment systems generally require dedicated hardware at the point of use and recharge and many systems are technically incompatible with each other. They are also not generally applicable to other types of transaction.

Accordingly, it is an aim of the present invention to provide a transaction and payment system that is secure, easy to use and widely acceptable.

According to the present invention there is provided a method of effecting a transaction comprising the steps of:
- providing a plurality of carriers, each carrier bearing resolvable identification data;
- establishing a database matching said resolvable identification data of each carrier with a corresponding monetary value;
- supplying a carrier to an end user in return for a monetary payment; and
- responsive to a request from a merchant for payment of a transaction value in respect of one of said carriers identified by first identification data:
   - verifying that said first identification data validly identifies one of said carriers;
   - determining whether the monetary value stored in said database corresponding to the identified carrier is sufficient to effect said payment;
   - where the corresponding monetary value is sufficient, decrementing the stored monetary value by an amount equivalent to said transaction value and indicating to said merchant that the transaction is effected; and
   - where the corresponding monetary value is insufficient, indicating to said merchant that the transaction is refused.

Because the payment card of the present invention is pre-paid, the user's exposure to loss or fraud is limited to the sum invested and this cannot be circumvented in any way. This provides instant reassurance to the user. By maintaining compatibility with an existing credit card system, e.g. VISA (RTM), the system of the present invention ensures immediate wide scale acceptability of the card and avoids any concerns that the user may have that he or she will not find places to spend the sum invested in purchase of a card.

The present invention has an additional significant advantage that it makes available the ever-expanding areas of commerce that require the use of credit cards to people who, for reasons of youth or personal circumstances, cannot obtain traditional credit cards. Furthermore the system allows purchases to be made anonymously.

The present invention will be described below with reference to an exemplary embodiment and the accompanying schematic drawings, in which:
Fig. 1 is a flow diagram illustrating the overall payment system according to an embodiment of the invention;
Figs. 2 to 5 are flow diagrams illustrating various forms of transaction permitted in the embodiment of the invention;
Fig. 6 is a flow diagram of a transaction authorization process according to the embodiment of the invention;
Fig. 7 is a flow diagram of a card recharging process according to the embodiment of the invention; and
Figures 8A and B illustrate the front and reverse faces of a payment card according to the present invention.

In the drawings, like parts or steps are indicated by like references.

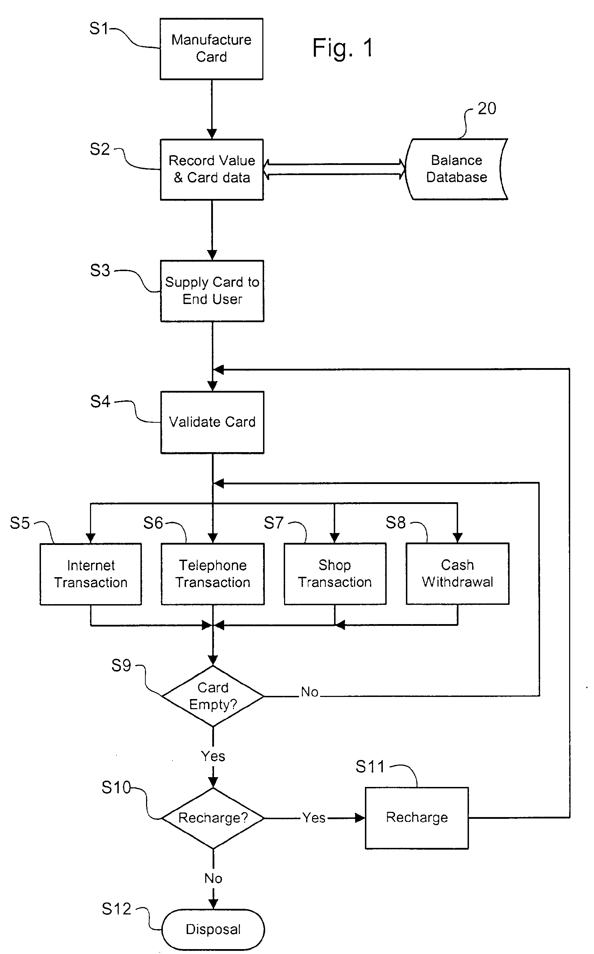

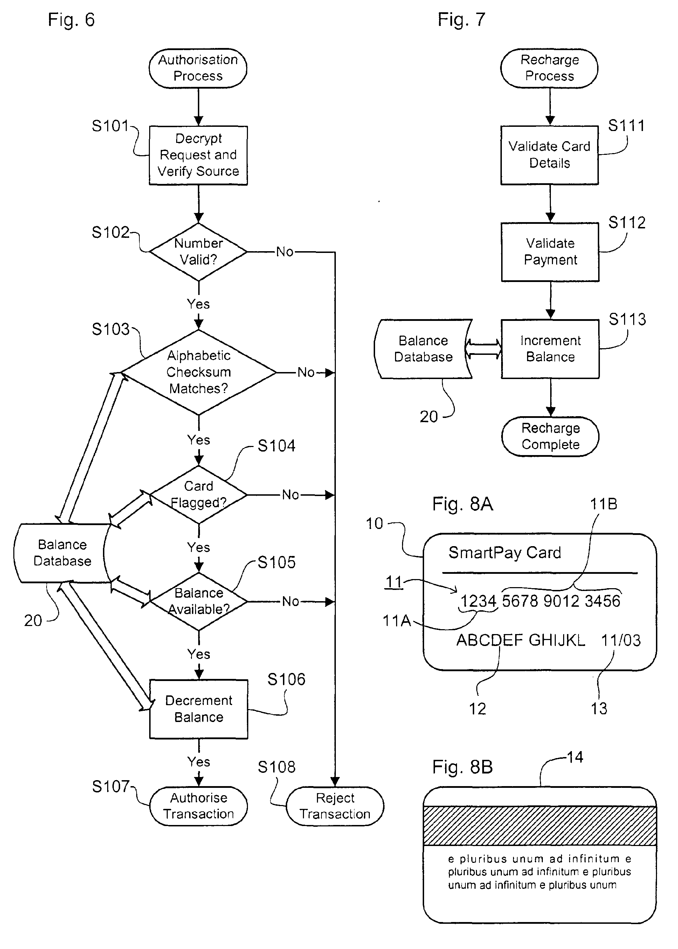

As shown in Figure 1, the payment system begins in step S1 with manufacture of carriers, or cards, the assignment of an initial value to the card, step S2, and the supply of the card to an end user, step S3. The supply (sale) of pre-pay cards to end users may be done by any suitable retail outlet or financial institution, by automatic vending machine, by mail or telephone order or via the Internet. Each card has a resolvable identity and carries identification data to indicate this. The identity need not necessarily be completely unique; card identities may be recycled in certain circumstances. A presently preferred example of a card is shown in Figures 8A and B. The card 10 preferably conforms to relevant credit card standards, bearing on its front face a 16 digit identity number 11, an alphabetic checksum 12 and optionally an expiry date 13. The identity number, alphabetic checksum and optional expiry date form the identification data to identify the card. In the credit card system, the first four digits identify the financial institution issuing the card whilst the remaining twelve provide ample numbers to ensure an adequate supply of cards. The identity number 11, alphabetic check sum 12 and optional expiry date 13 are conveniently placed in the standard positions for a credit card with the alphabetic check sum 12 taking the place of the card holder name. Logos and security devices such as holograms may be provided as is conventional. On the reverse, the card carries a magnetic strip 14 in which the identification data printed on the front face are encoded in a standard format. A signature strip is not normally provided but can be for use in face-to-face transactions such as shop purchases or over-the-counter cash withdrawals. Additionally, a space may be provided for the user to write his or her name and address as a countermeasure against theft. The card 10 may also incorporate an embedded IC and contacts conforming to "Smart Card" standards.

Relevant international (ISO) standards relating to credit cards include:
7810 Identification Cards - Physical Characteristics
7811-1 Identification Cards- Recording Technique Part 1: Embossing
7811-2 Identification Cards- Recording Technique Part 2: Magnetic Stripe
7811-3 Identification Cards- Recording Technique Part 3: Location of Embossed Characters on ID-1 cards
7811-4 Identification Cards- Recording Technique Part 4: Location of read-only magnetic tracks - Tracks 1 & 2
7811-5 Identification Cards- Recording Technique Part 5: Location of read-write magnetic track - Track 3
7811-6 Identification Cards- Recording Technique Part 6: Magnetic Stripe - High Coercivity
7813 Identification Cards - Financial Transaction Cards
7816-1 Identification Cards - Integrated Circuit(s) Cards with Contacts Part 1: Physical Characteristics
7816-2 Identification Cards - Integrated Circuit(s) Cards with Contacts Part 2: Dimensions and Location of the Contacts

The assignment of an initial value to the card, and the recordal of that value in relation to the card identification data in balance database 20, may be carried out at manufacture or, if the card retailer is provided with a suitably equipped terminal, at the point of sale. If values are assigned to the cards at manufacture then cards of a range of values, such as 10, 20, 50, 100, 200, 500 units of currency, e.g. US Dollars or Pounds Sterling, are preferably provided. The initial value of the card may be printed on the card itself and/or any associated packaging. If the value is assigned at the point of sale, greater flexibility in the value assigned may be permitted.

Payment of the value of the issued card can be made in any form accepted by the retailer, e.g. cash, cheque, credit card. The payment required for the card need not be exactly equal to the value of the card issued; a small premium may be charged (either as a fixed sum or a percentage of the issued card value) in some circumstances and a discount may be given in others. Payment for the card need not be made in the same currency as the nominal value of the issued card. To prevent fraud and money laundering a maximum value for issued cards may be set.

The card is preferably provided in a small package that will include instructions for use and any conditions of use, disclaimers, warnings, etc. Preferably the packaging will be sealed and tamper-evident with the card identification data not visible prior to opening the package. This will reassure the user that the card has not been used or tampered with by the retailer. Included in the instructions is a 4 digit Personal Identification Number (PIN) that is used for validation of the card and in some transactions. For additional security the PIN number is preferably covered by a tamper-evident opaque covering such as used in scratchcards and the like.

After purchase and before first use, the user is required to validate the card by contacting the validation centre and providing the card identification data and PIN. This process may be done by any suitable means, e.g. by telephone, via the Internet or in selected ATM machines of participating financial institutions. At this point the user may be given the opportunity to register his or her ownership of the card as a countermeasure against theft. However, to preserve anonymity, where desired, the provision of personal details of the card owner is not obligatory.

Once the card has been validated, the user may use it to make purchases of goods in any outlet accepting credit cards of the relevant type. Transactions with the pre-pay card of the present invention are essentially the same as ordinary credit card transactions but with one important exception. Because of the pre-pay nature of the cards and because the user of the card will usually be unknown to the card issuer, it is important that all transactions on the card be authorised. In the authorisation process, described further below, cleared transactions are debited to the card balance and any transaction for which insufficient funds are available is rejected. No transaction is permitted to take the card balance below zero. With conventional credit cards, a shop may have a floor limit and only authorize transactions above that amount. An existing system, the VISA ELECTRON (RTM) system, requires that all transactions with cards issued in this system be authorized on-line.

Examples of forms of transaction that can be made with the pre-pay card 10 include: Internet transactions, step S5; telephone transactions, step S6; shop transactions, step S7; and cash withdrawals, step S8. These transactions are described in further detail below. In any transaction, the card value stored in database 20 is decremented by the amount of the transaction, after conversion to the currency of the pre-pay card, if necessary.

If a balance still remains to the card after a transaction, the user can use the card again for further transactions, as desired. If the balance is reduced to zero, a facility to recharge the card, step S11, can be provided and the user proceeds to this if desired, step S10. If recharge is not possible, or not desired by the user, the empty pre-pay card is discarded, step S12.

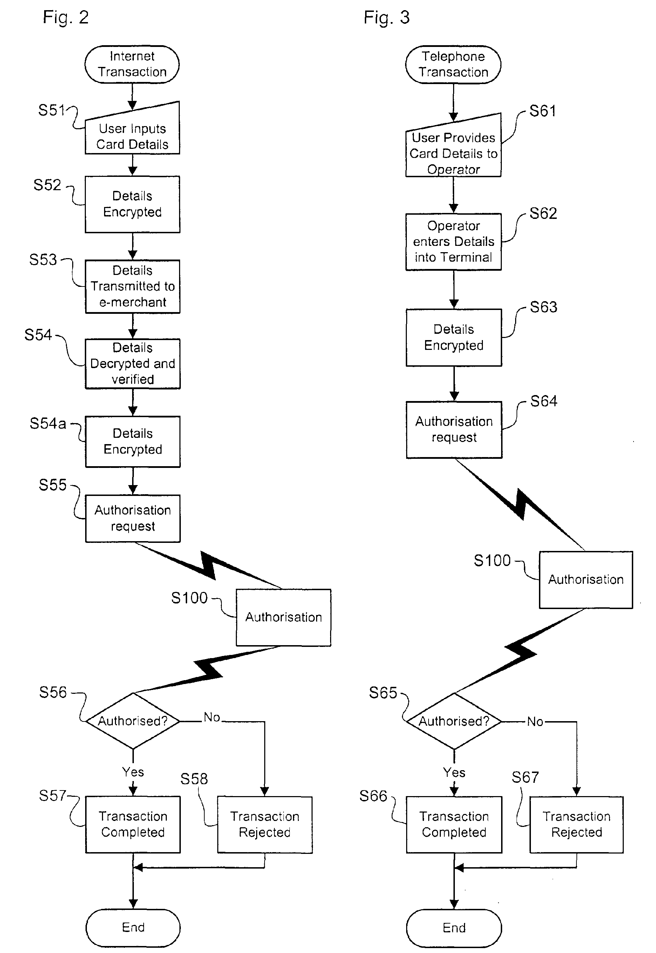

An Internet transaction is shown in more detail in Figure 2. Whilst browsing an e-merchant's website, the user may desire to make a purchase. At a suitable point after selection of the desired goods, the user will be requested to enter his/her card details for payment. If the e-merchant is set up to accept credit cards of the system with which the pre-pay card of the present invention is compatible, the user inputs the sixteen digit card number and the alphabetic checksum in the form provided on his or her browser, step S51. These details are then encrypted, step S52, if the user's browser supports the relevant encryption standard, and transmitted, step S53, to the e-merchant where they are decrypted, step S54. At this stage, if the alphabetic checksum includes an encoded check digit or parity digit, an initial verification that the details provided relate to a potentially valid pre-pay card can be performed.

The next and most important step is for the e-merchant to seek authorisation for the transaction. The e-merchant therefore transmits an authorisation request, either directly to the issuer of the pre-pay card 10 or via the relevant credit card clearing system. The authorisation request should be encrypted before transmission, step S54a, but it may be possible to omit this step, e.g. if the communication channel between merchant and authoriser is intrinsically secure. The authorization request will include the card identification data, transaction amount and currency and details of the e-merchant. For fraud spotting and statistical purposes, the authorisation request may include details of the goods or services to be purchased. The authorisation process, step S100, which is described further below, returns an authorisation code or a rejection of the transaction. The merchant notes this, step S56 and then completes the transaction, step S57, or rejects it, step S58. If a transaction is rejected because there are insufficient funds remaining to the card, the user may be offered the opportunity to make up the total amount of the transaction using more than one pre-pay card, or some other form of payment.

A telephone transaction, shown in Figure 3, is similar. Instead of entering the card details into a form on a web browser, the user will read, them over the telephone to an operator, step S61, who enters them into a terminal, step S62, which encrypts them, if necessary step S63, and transmits the authorisation request, step S64, to the pre-pay card issuer or the credit card clearing system. As with an Internet transaction, the result of the authorisation process S100 is received, step S65, and the transaction completed, step S66, or rejected, step S67. In some fully automated telephone services, the user may select goods or services, e.g. cinema tickets, to purchase by following telephone prompts and enter the card details using a telephone keypad. In this type of transaction, the alphabetic checksum may not be required.

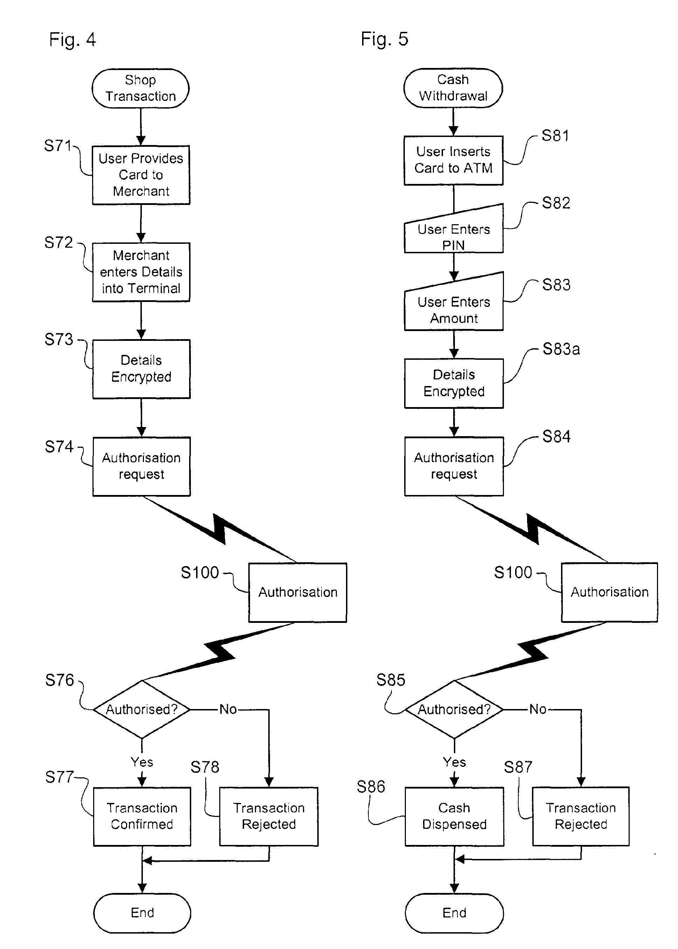

A shop transaction is shown in Figure 4 and again is similar to an Internet transaction. The user will present the card to the merchant, step S71, who will enter the details into a terminal, step S72, usually by swiping the card through a card reader. The terminal automatically encrypts the details as necessary, step S73, and transmits the authorisation request, step S74. Completion or rejection of the transaction, steps S76 to S78, is as normal. It is particularly important with shop trades that all transactions are cleared, since shop assistants may be used to transactions not requiring authorisation, and for this reason transactions effected on paper vouchers may be prohibited.

Cash withdrawals, shown in Figure 5, may be made through Automated Teller Machines (ATMs) of participating financial institutions. These proceed in the usual manner: the user inserts the card into the ATM, step S81; enters the PIN when prompted, step S82; and the amount of cash desired, step S83. An authorisation request is prepared and transmitted, step S84, and dependent on the result of the authorisation the cash requested is dispensed, step S86, or the request rejected, step S87. Again, the authorisation request should be encrypted before transmission, step S83a, but again it may be possible to omit this step, e.g. if the communication channel between merchant and authoriser is intrinsically secure. If the amount of cash requested by the user is greater than that available to the card but some funds are available, the user may be offered a reduced amount. To reduce the opportunity for fraud or money laundering, cash withdrawals may be limited in amount, e.g. to 50% of the initial value of the card, in total or per transaction and/or in frequency, e.g. once per card or once per day. Cash withdrawals may be prohibited entirely on low denomination cards and may attract a fixed or percentage transaction fee. Over-the-counter transactions may also be permitted.

The authorisation process is shown in Figure 6. This process is essentially the same, whichever type of transaction is to be authorised. Firstly, in step S101 the authorisation request is decrypted and the source of it is verified. Next, an initial verification that the card number is from a possible pre-pay card is determined, step S102. At this stage the expiry date, if provided, may also be checked. In step S103, the balance database 20 is consulted to verify that the card number 11 matches the alphabetic checksum 12. Database 20 is also consulted, step S104, to determine if the card is flagged as stolen or otherwise invalid. In step S105, the remaining balance is compared to the transaction value, converted to the relevant currency as necessary, to determined whether sufficient funds are available. For some forms of transactions, e.g. cash withdrawals, additional conditions may be imposed and these are taken into account in this step. For example, the transaction may not be permitted to reduce the card balance below an minimum residual amount or the past history of transactions may be considered.

If all of steps S102 to S106 have generated positive answers, the card balance is decremented at step S106 by the transaction value and any transaction charges that may be incurred, e.g. for cash withdrawals. The transaction is then authorised and an authorisation code transmitted to the requester of the authorisation. At the same time a corresponding credit is made to the merchant's account, which may be held at the pre-pay card issuer or with another financial institution. The credit to the merchant's account may be made after deduction of a fixed or percentage transaction fee. However, if any of steps S102 to S105 produce a negative answer, the process proceeds directly to reject the transaction and an appropriate message is sent to the requester of the authorisation.

The pre-pay card system can allow for cards to be replenished when the initial balance has been spent, however this feature may be limited to certain types of card or omitted. Where replenishment, or recharging, of cards is permitted, a process for this is illustrated in Figure 7. The recharge process is carried out by an authorised financial institution capable of verifying the payment to be credited to the card and may also be carried out electronically by transfer from a conventional credit or charge card. Electronic transfers from on-line banking systems may also be permitted, as may transfers between pre-pay cards of the invention. In the recharging process, first the details of the card to be credited are verified and double checked, step S111. If the owner of the card has registered his details with the pre-pay card issuer, these may be used to confirm that the correct card is to be credited. Next, in step S112, the payment to be credited to the card is verified. How this is done will depend on the nature of the payment. However it is important that the payment is verified thoroughly since, owing to the anonymous nature of the pre-pay card, if the credited amount is spent quickly it will not be possible to recover that money if the payment for the recharge is subsequently rejected. Once both card details and payment are verified the card balance is incremented in the balance database 20. A receipt may be issued to the user.

To prevent fraud and money laundering, credits to pre-pay cards are generally limited. However, provision should be made for incorrect transactions to be credited and for credits to be made to a pre-pay card when goods are returned, e.g. as faulty.

Malfunctioning cards, e.g. if the magnetic strip ceases to be readable, can be returned to an authorised outlet, or participating financial institution, for replacement by a new card. In the event of theft, any remaining balance can be frozen when the theft is reported and refunded, or transferred to a new card, on proof of purchase.

Whilst we have described above an embodiment of the present invention, it will be appreciated that the present invention may be practised otherwise than as described. The scope of the invention is to be determined by the appended claims rather than the foregoing description.

## Claims

1. A method of effecting a transaction comprising the steps of:
- providing a plurality of carriers, each carrier bearing resolvable identification data;
- establishing a database matching said resolvable identification data of each carrier with a corresponding monetary value;
- supplying a carrier to an end user in return for a monetary payment; and
- responsive to a request from a merchant for payment of a transaction value in respect of one of said carriers identified by first identification data:
- verifying that said first identification data validly identifies one of said carriers;
- determining whether the monetary value stored in said database corresponding to the identified carrier is sufficient to effect said payment;
- where the corresponding monetary value is sufficient, decrementing the stored monetary value by an amount equivalent to said transaction value and indicating to said merchant that the transaction is effected; and
- where the corresponding monetary value is insufficient, indicating to said merchant that the transaction is refused.

2. A method according to claim 1 wherein said identification data comprises a credit card number and a corresponding alphanumeric string.

3. A method according to claim 2 wherein said alphanumeric string includes a coded checksum of said credit card number.

4. A method according to any one of the preceding claims wherein said carrier comprises a credit card.

5. A method according to any one of the preceding claims wherein said carrier comprises a smart card.

6. A method according to any one of the preceding claims wherein, in said step of determining, said monetary value is determined to be sufficient if it exceeds said transaction value by a predetermined minimum residual amount.

7. A method according to claim 6 wherein said predetermined minimum residual amount is zero.

8. A method according to any one of the preceding claims wherein:
- each of said carriers has an associated activation code; and
- said step of supplying comprises the steps of;
- informing said user of said activation code separately from said carrier; and
- activating said carrier in response to a request from said user including said identification data and said activation code.

9. A method according to claim 8 wherein said activation code is a four digit number.

10. A method according to claim 8 or 9 wherein said activation code is printed on a separate member covered by an irreplaceable mask.

11. A method according to claim 10 wherein said separate member comprises packaging for said carrier or an accompanying leaflet.

12. A method of effecting transactions comprising the steps of:
- establishing a database of initial values balances for a plurality of resolvable cards;
- receiving requests for authorisation of transactions, each said request including identification data identifying one of said plurality of cards and a transaction value; and, for each request:
- comparing said transaction value to the value balance of the one of said plurality of cards identified by said identification data;
- where said value balance is greater than or equal to said transaction value, decrementing said value balance by the amount of said transaction value and transmitting an authorisation signed to the sender of said request.

13. A computer program comprising computer program code means adapted, when executed on a computer, to instruct the computer to perform the steps of claim 13.

14. A computer-readable storage medium having stored thereon a computer program according to claim 13.
